(19) Europäisches Patentamt / European Patent Office / Office européen des brevets

(11) **EP 4 033 000 B1**

(12) **EUROPEAN PATENT SPECIFICATION**

(45) Date of publication and mention
of the grant of the patent:
**27.08.2025   Bulletin 2025/35**

(21) Application number: **20866084.5**

(22) Date of filing: **15.09.2020**

(51) International Patent Classification (IPC):
*C22C 38/02* (2006.01)     *C22C 38/00* (2006.01)
*C22C 38/12* (2006.01)     *C22C 38/16* (2006.01)
*C22C 38/04* (2006.01)     *B22D 11/06* (2006.01)
*C21D 1/18* (2006.01)     *C21D 1/613* (2006.01)
*C21D 8/02* (2006.01)     *C21D 9/56* (2006.01)
*C21D 9/46* (2006.01)     C21D 1/02 (2006.01)
C21D 1/25 (2006.01)     C21D 1/26 (2006.01)
C21D 1/74 (2006.01)     C21D 1/76 (2006.01)
*C21D 9/663* (2006.01)

(52) Cooperative Patent Classification (CPC):
**B22D 11/0622; C21D 1/18; C21D 1/613;
C21D 8/0215; C21D 8/0226; C21D 9/46;
C21D 9/56; C22C 38/001; C22C 38/008;
C22C 38/02; C22C 38/04; C22C 38/12;
C22C 38/16;** C21D 1/02; C21D 1/25;     (Cont.)

(86) International application number:
**PCT/CN2020/115280**

(87) International publication number:
**WO 2021/052312 (25.03.2021 Gazette 2021/12)**

(54) **MARTENSITIC STEEL STRIP AND MANUFACTURING METHOD THEREFOR**

MARTENSITISCHES STAHLBAND UND VERFAHREN ZU SEINER HERSTELLUNG

BANDE D'ACIER MARTENSITIQUE ET PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2019   CN 201910888738
19.09.2019   CN 201910888765**

(43) Date of publication of application:
**27.07.2022   Bulletin 2022/30**

(73) Proprietor: **BAOSHAN IRON & STEEL CO., LTD.
Shanghai 201900 (CN)**

(72) Inventors:
• **WU, Jianchun
Shanghai 201900 (CN)**
• **FANG, Yuan
Shanghai 201900 (CN)**

(74) Representative: **Kuhnen & Wacker
Patent- und Rechtsanwaltsbüro PartG mbB
Prinz-Ludwig-Straße 40A
85354 Freising (DE)**

(56) References cited:
EP-A1- 2 209 926     EP-A1- 2 398 929
EP-A1- 3 276 022     EP-B1- 2 209 926
EP-B1- 2 398 929     CN-A- 103 667 878
CN-A- 103 667 878     CN-A- 103 667 895
CN-A- 103 667 895     CN-A- 107 429 349
CN-A- 107 429 349     CN-A- 109 072 381

(52) Cooperative Patent Classification (CPC): (Cont.)
C21D 1/26; C21D 1/74; C21D 1/76; C21D 8/0205;
C21D 8/0263; C21D 9/663; C21D 2211/002;
C21D 2211/008; Y02P 10/20

## Description

## Technical Field

The present invention relates to a continuous casting process, and particularly to a martensitic steel strip and a manufacturing method thereof.

## Background Art

In the traditional process for steel production, tin (Sn) and copper (Cu) are typical residual elements or harmful elements in steel. It is very difficult and expensive to remove Sn and Cu fully during the steelmaking process. Generally, once the steel contains Sn and Cu, they cannot be eliminated thoroughly. Instead, the contents of Sn and Cu can only be reduced by diluting molten steel, which leads to an increased smelting cost for steel products.

In recent years, due to the repeated recycling of steel scrap, more and more steel scrap resources, and a continually decreased electricity price, short-flow steelmaking with an electric furnace based on steel scrap has risen and has been popularized domestically. As a result, the contents of Sn, Cu and other residual elements in the steel get higher and higher. Sn and Cu in steel are elements prone to segregation, and they may be enriched easily at grain boundaries to cause defects such as cracks. Therefore, the contents of Sn and Cu elements are controlled strictly in the traditional process. In common structural steel, definite requirements are imposed on the contents of both Sn and Cu: Sn (wt%) ≤0.005%; Cu (wt%) ≤0.2%.

Therefore, if the residual elements such as Sn and Cu in steel (especially steel scrap) can be utilized reasonably so as to "turn harm into benefit", it will have a positive influence on the entire metallurgical industry. Particularly, effective utilization of the existing steel scrap, or low quality or poor quality mineral resources (high tin ore, high copper ore) can be achieved; the recycling of steel can be promoted; the production cost can be reduced; and the sustainable development of the steel industry can be realized.

Traditional thin strip steel is mostly produced by multi-pass continuous rolling of a cast slab having a thickness of 70-200 mm. The traditional hot rolling process is: continuous casting + cast slab reheating and heat preservation + rough rolling + finish rolling + cooling + coiling. Particularly, a cast slab having a thickness of about 200 mm is firstly obtained by continuous casting; the cast slab is reheated and held; then, rough rolling and finish rolling are performed to obtain a steel strip having a thickness generally greater than 2 mm; and finally, laminar cooling and coiling are performed on the steel strip to complete the entire hot rolling production process. If a steel strip having a thickness of less than or equal to 1.5 mm is to be produced, it is relatively difficult, because subsequent cold rolling and annealing of the hot-rolled steel strip are generally necessary. In addition, the long process flow, the high energy consumption, the large number of unit devices, and the high capital construction cost result in high production cost.

The thin slab continuous casting and rolling process flow is: continuous casting + heat preservation and soaking of the cast slab + hot continuous rolling + cooling + coiling. The main differences between this process and the traditional process are as follows: the thickness of the cast slab in the thin slab process is greatly reduced to 50-90 mm. Because the cast slab is thin, the cast slab only needs to undergo 1-2 passes of rough rolling (when the thickness of the cast slab is 70-90 mm), or does not need to undergo rough rolling (when the thickness of the slab is 50 mm). In contrast, the continuous casting slab in the traditional process needs to be rolled repeatedly for multiple passes before it can be thinned to the required gauge before finish rolling. In addition, the cast slab in the thin slab process does not undergo cooling, but enters a soaking furnace directly for soaking and heat preservation, or a small amount of heat is supplemented. Hence, the thin slab process greatly shortens the process flow, reduces energy consumption, reduces investment, and thus reduces production cost. However, due to the fast cooling rate, the thin slab continuous casting and rolling process increases the steel strength and yield ratio, thereby increasing the rolling load, so that the thickness gauge of the hot-rolled products that can be economically produced cannot be too thin, generally ≥ 1.5mm. See Chinese patents CN200610123458.1 (CN 1962099 A), CN200610035800.2 (CN 1884608 A) and CN200710031548.2 (CN 101161849 A). Moreover, Sn and Cu elements are not involved in these patent applications.

The endless thin slab continuous casting and rolling process (ESP in short) rising in recent years is an improved process developed on the basis of the above semi-endless thin slab continuous casting and rolling process. The ESP realizes endless rolling for continuous casting of a slab, and eliminates the flame cutting of the slab and the heating furnace that is used for heat preservation, soaking and transition of slabs. The length of the entire production line is greatly shortened to about 190 meters. The slab produced by continuous casting with a continuous casting machine has a thickness of 90-110 mm and a width of 1100-1600 mm. The slab produced by continuous casting passes through an induction heating roll table to effect heat preservation and soaking on the slab. Then, the slab enters the rough rolling, finish rolling, laminar cooling, and coiling processes to obtain a hot-rolled plate. Since this process realizes endless rolling, a hot-rolled plate having a minimum thickness of 0.8 mm can be obtained, which expands the range of the gauge of hot-rolled plates. In addition, the output of a single production line can reach 2.2 million t/year. At present, this process has been developed and promoted rapidly, and there are a plurality of ESP production lines in operation around the world.

The thin strip continuous casting and rolling process has a shorter process flow than the thin slab continuous casting and rolling. The thin strip continuous casting technology is a cutting-edge technology in the research field of metallurgy and materials. Its appearance brings about a revolution to the steel industry. It changes the production process of steel strip in the traditional metallurgical industry by integrating continuous casting, rolling, and even heat treatment, so that the thin strip blank produced can be formed into a thin steel strip at one time after one pass of online hot rolling. Thus, the production process is simplified greatly, the production cycle is shortened, and the length of the process line is only about 50 m. The equipment investment is also reduced accordingly, and the product cost is significantly reduced. It is a low-carbon, environmentally friendly process for producing a hot-rolled thin strip. The twin-roll thin strip continuous casting process is the main form of the thin strip continuous casting process, and it is also the only thin strip continuous casting process that has been industrialized in the world.

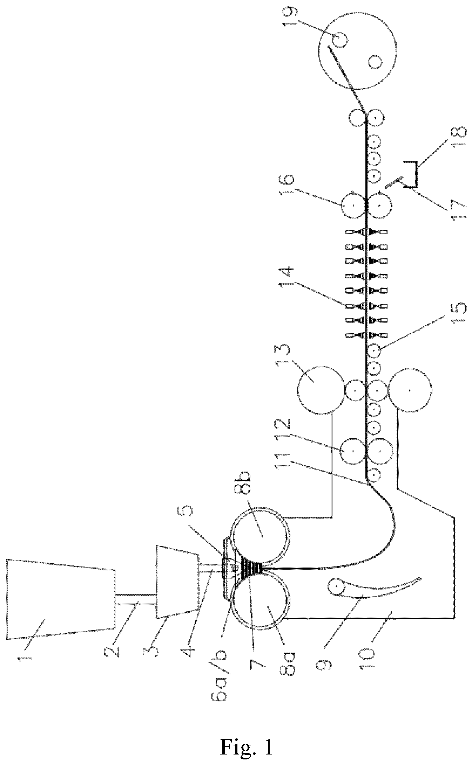

A typical process flow of twin-roll thin strip continuous casting is shown by Fig. 1. The molten steel in a ladle 1 passes through a ladle shroud 2, a tundish 3, a submerged nozzle 4 and a distributor 5, and is then directly poured into a molten pool 7 formed with side sealing devices 6a, 6b and two counter-rotating crystallization rolls 8a, 8b capable of rapid cooling. The molten steel solidifies on the circumferential surfaces of the rotating crystallization rolls 8a, 8b to form a solidified shell which gradually grows, and then forms a 1-5mm thick cast strip 11 at the minimum gap (nip point) between the two crystallization rolls. The cast strip is guided by a guide plate 9 to pinch rolls 12 and sent to a rolling mill 13 to be rolled into a thin strip of 0.7-2.5 mm, and then cooled by a cooling device 14. After its head is cut off by a flying shear 16, it is finally sent to a coiler 19 to be coiled into a coil.

Martensite in carbon steel is formed by rapidly cooling or quenching austenite. Austenite has a special FCC crystal structure. Under natural cooling, austenite transforms into ferrite and cementite. However, under rapid cooling or quenching conditions, the austenite with the FCC crystal structure transforms into ferrite having a highly strained BCT crystal structure which is a supersaturated solid solution of carbon. The large number of dislocations caused by shear strain is the initial strengthening mechanism of this steel. The martensitic effect begins when the austenite reaches a temperature at which the martensitic transformation begins in the cooling process and the parent austenite becomes thermodynamically unstable. When the sample is quenched, the proportion of the austenite that transforms to martensite increases continuously until the transformation is completed at a lower transformation temperature.

Martensitic steel is used more and more often in certain fields that require high strength, such as automotive steel. A typical tensile strength of martensitic steel is generally in the range of 1000-1500 MPa. Martensitic steel is mainly used for safety components for body collision protection such as bumpers. In recent years, high-strength steel accounts for a yearly increasing fraction of the steel used in a vehicle. In the automotive industry, the use of thin-gauge, high-strength martensitic steel products provide broad room for weight reduction, energy saving and fuel economy improvement.

A thin strip continuous casting process is used to produce martensitic steel. Due to the thin thickness, the thin strip continuous casting process has strong manufacturing and cost advantages for a thin-gauge hot-rolled high-strength product having a thickness of less than or equal to 1.5 mm. The characteristic thicknesses of martensitic steel strip products directly supplied in hot-rolled state are 1.0 mm, 1.1 mm, 1.2 mm, 1.25 mm, 1.4 mm and 1.5mm, etc. Due to the small product thickness, many manufacturers are limited by the capacity of the traditional hot continuous rolling line in producing traditional thin-gauge martensitic steel. Generally, a hot continuous rolling process is used first for the production, followed by cold rolling, then entering a continuous annealing line for heating to an austenite phase region, and finally quenching to form martensitic steel. This production process increases the production cost for producing the thin-gauge martensitic high-strength steel.

When hot-rolled strip steel is used as a thin-gauge hot-rolled plate or a hot-rolled product in place of a cold-rolled product, high surface quality of the strip steel is required. It is generally required that the thickness of the oxide scale on the surface of strip steel should be as thin as possible. This requires control of the formation of the oxide scale on the cast strip in the subsequent stages. For example, in a typical twin-roll continuous casting process for thin strip steel, a closed chamber device is used from the crystallization rolls to the inlet of the rolling mill to prevent oxidation of the cast strip. Addition of hydrogen to the closed chamber device as disclosed in US Patent No. 6,920,912 (US 6920912 B2) and control of the oxygen content to be less than 5% in the closed chamber device as disclosed in US Patent Application US 2006/0182989 A1 can both help to control the thickness of the oxide scale on the cast strip surface. However, there are few patents relating to how to control the thickness of the oxide scale in the conveying process from the rolling mill to the coiler, especially in the process of cooling the strip steel by laminar cooling or spray cooling. When the high-temperature strip steel is in contact with the cooling water, the thickness of the oxide scale on the surface of the cast strip grows rapidly. At the same time, the contact of the high-temperature strip steel with the cooling water may also cause many problems: first, water spots (rust spots) may be formed on the surface of the strip steel, which will affect the surface quality; second, cooling water for laminar cooling or spray cooling tends to cause local uneven cooling on the surface of the strip steel, resulting in a nonuniform microstructure inside the strip steel, so that the properties of the strip steel are not uniform and the product quality is affected; third, the local uneven cooling on the surface of the strip steel may cause deterioration of the strip shape, which affects the shape quality.

**EP 4 033 000 B1**

Moreover, the published patent applications EP 3 276 022 A1, CN 103 667 878 A and CN 103 667 895 A disclose steel sheets/thin steel strips and their manufacturing methods according to prior art.

However, because the thin strip continuous casting process itself is characterized by rapid solidification, the steel produced by this process generally has problems such as nonuniform structure, low elongation, high yield ratio and poor formability. At the same time, the austenite grains in the cast strip are obviously not uniform, such that the structure of the final product obtained after austenite transformation is not uniform, either. Hence, the properties of the product are not stable. Therefore, it is difficult and challenging to use a thin strip continuous casting production line to produce high-strength products needed in the automobile industry and petrochemical industry. Therefore, when high-strength martensitic steel is to be produced by thin strip continuous casting, the production is impossible if the traditional composition and process are copied. Breakthrough in composition and process is necessary.

## Summary

One object of the present invention is to provide a martensitic steel strip and a manufacturing method thereof, wherein a thin strip continuous casting process is employed to produce a hot-rolled thin-gauge martensitic steel strip, so that a good number of complicated intermediate steps in the traditional production of a martensitic steel strip may be obviated. A desired product thickness can be achieved by single-pass online hot rolling, and the product may be marketed directly for use without cold rolling, so as to achieve the purpose of "replacing cold rolling with hot rolling". According to the present invention, full use of Cu and Sn elements in steel scrap can be made to "turn harm into benefit" in terms of the Cu and Sn elements in the steel scrap, thereby promoting recycling of steel scrap resources, reducing production cost effectively, and realizing sustainable development of the steel industry. Compared with a traditional cold-rolled martensitic steel strip, the present invention achieves great reduction of energy consumption and $CO_2$ emission in production, and provides a green product.

To achieve the above object, the technical solution of the present invention is defined in claim 1. Further improvements are subject to the dependent claims.

According to the present invention, residual elements such as Sn and Cu in steel scrap are utilized in smelting to produce molten steel, and micro-alloy elements such as Nb/Mo and the like as well as optional B are selectively added to the steel. In the smelting process, the basicity for slagging, the type and melting point of the inclusions in the steel, the free oxygen content in the molten steel, and the content of acid-soluble aluminum Als are controlled. Then, twin-roll thin strip continuous casting is performed to cast a cast strip having a thickness of 1.5-3 mm. After the cast strip exits crystallization rolls, it directly enters a lower closed chamber having a non-oxidizing atmosphere, and enters an on-line rolling mill for hot rolling under closed conditions. The rolled strip steel is rapidly quenched by gas atomization and cooled to 300 °C or less. The steel coil produced finally can be subjected to isothermal tempering treatment, or enters a continuous annealing production line for aging treatment. The gas atomization cooling can effectively reduce the thickness of the oxide scale on the surface of the strip steel, increase the temperature uniformity of the strip steel, and improve the surface quality of the strip steel.

In the chemical composition design of the martensitic steel strip according to the present invention:

C: C is the most economical and basic strengthening element in the steel. It increases the steel strength by solid solution strengthening and precipitation strengthening. C is an essential element for precipitation of cementite during austenite transformation. Hence, the level of C content largely determines the strength level of the steel. That is, a higher C content leads to a higher strength level. However, since the interstitial solid solution and precipitation of C do great harm to the plasticity and toughness of the steel, and an unduly high C content is unfavorable to the welding performance, the C content cannot be too high. The steel strength is compensated by appropriate addition of an alloy element(s). At the same time, for conventional slab continuous casting, casting in the peritectic reaction zone is prone to produce cracks in the surface of the cast slab, and breakout accidents may occur in severe cases. The same is true for thin strip continuous casting, i.e. casting in the peritectic reaction zone is prone to produce cracks in the surface of the cast strip blank, and the strip will be broken in severe cases. Therefore, the thin strip casting of Fe-C alloy also needs to circumvent the peritectic reaction zone. Hence, the content of C used according to the present invention is in the range of 0.16-0.26%.

Si: Si plays a role in solid solution strengthening in the steel, and the addition of Si to the steel can improve steel purity and fulfill deoxygenation. However, an unduly high content of Si will deteriorate weldability and toughness of the welding heat affected zone. Hence, the content of Si used according to the present invention is in the range of 0.1-0.5%.

Mn: Mn is one of the cheapest alloy elements. It can improve the hardenability of the steel. It has a considerable solid solubility in the steel, and increases the steel strength by solid solution strengthening with no damage to the plasticity or toughness of the steel. It is the most important strengthening element to improve the steel strength, and it can also play a role in deoxygenation in the steel. However, an unduly high content of Mn will deteriorate weldability and toughness of the welding heat affected zone. Hence, the content of Mn used according to the present invention is in the range of 0.4-1.7%.

P: If the content of P is high, it is prone to segregate at the grain boundary, so that the cold brittleness of the steel will be increased, thereby worsening the weldability, and the plasticity of the steel will be decreased, thereby worsening the cold bendability. In the thin strip continuous casting process, the solidification and cooling rate of the cast strip is extremely fast, and thus the segregation of P can be suppressed effectively. As a result, the disadvantages of P can be avoided effectively, and full use of the advantages of P can be made. Therefore, according to the present invention, the P content is higher than that used in the traditional production process, and the limitation to the content of P element is relaxed appropriately. The dephosphorization process is eliminated from the steelmaking process. In the practical operation, it's not necessary to perform dephosphorization process or add phosphorus intentionally, and the content of P is in the range ≤0.02%.

S: Generally, S is a harmful element in the steel. Particularly, it introduces hot shortness to the steel, reduces the ductility and toughness of the steel, and causes cracks during rolling. S also reduces weldability and corrosion resistance. Therefore, according to the present invention, S is also controlled as an impurity element, and its content is in the range of ≤0.007%. In some embodiments, the S content is ≤0.0067%. In addition, the ratio of the weight percentage of Mn to the weight percentage of S is Mn/S>250.

Als: In order to curb the inclusions in the steel, Al cannot be used for deoxygenation as required by the present invention. In the use of refractories, additional introduction of Al should also be avoided as far as possible, and the content of acid-soluble aluminum Als should be strictly controlled: <0.001%.

N: Similar to C element, N element can improve steel strength by interstitial solid solution. However, the interstitial solid solution of N does notable harm to the plasticity and toughness of the steel, and the existence of free N may increase the yield ratio of the steel. So, the N content should not be too high. In addition, when B is present, N in the steel can react with B to form a BN precipitation phase. Hence, a certain amount of N is required in the steel. Therefore, the content of N used according to the present invention is in the range of 0.004-0.010%.

Nb: In the thin strip continuous casting process, due to its unique characteristics of rapid solidification and rapid cooling, the alloy element Nb that is added may exist mainly in a solid solution state in the steel strip. Even if the steel strip is cooled to room temperature, precipitation of Nb can hardly be observed. Nb element that is solid dissolved in steel can play a role in solid solution strengthening. Nb that is solid dissolved in the steel can drag austenite grain boundaries by means of solute atoms. From this point of view, Nb is conducive to promoting transformation of austenite to martensite after hot rolling. When Nb is added, the Nb content designed according to the present invention is in the range of 0.01-0.08%.

Mo: As an alloy element of steel, Mo can improve steel strength, especially high temperature strength and toughness. Mo can improve hardenability, weldability and heat resistance of the steel. Mo is also a good carbide-forming element, and it will not be oxidized in the process of steelmaking. It can be used alone or in combination with another alloy element. In a thin strip continuous casting process, Mo mainly exists in a steel strip in a solid solution state, and it can play a role in solid solution strengthening. Mo that is solid dissolved in the steel can drag austenite grain boundaries by means of solute atoms, which is conducive to promoting martensitic transformation after hot rolling. When Mo is added, the Mo content used according to the present invention is in the range of 0.1-0.4%.

Cu: Cu mainly plays a role in solid solution strengthening and precipitation strengthening in the steel. Since Cu is an element prone to segregation, the content of Cu is generally controlled strictly in the traditional process. In view of the rapid solidification effect of thin strip continuous casting, the upper limit of Cu is increased to 0.60% according to the present invention. In a certain sense, the increased Cu content can realize effective utilization of copper in steel scrap or poor quality mineral resources (high-copper ore), promote the recycling of steel, reduce production cost, and achieve the purpose of sustainable development. In some embodiments, the content of Cu, if added, is in the range of 0.1-0.6%.

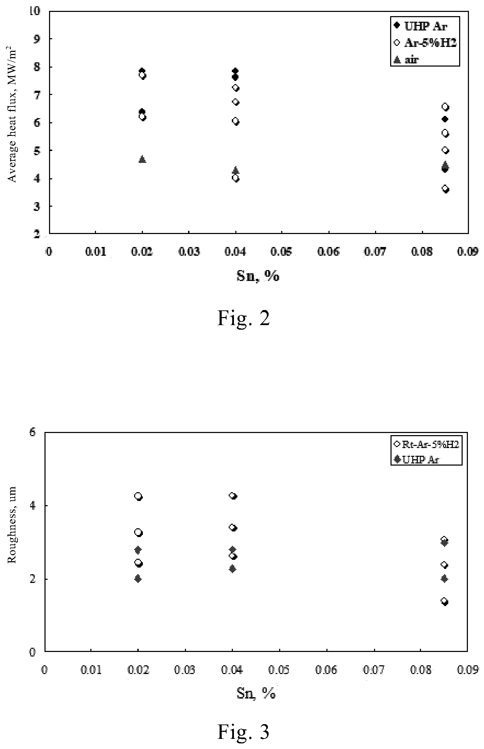

Sn: Sn element is also one of the main residual elements in steel scrap. It is recognized as a harmful element in steel. Because Sn is an element prone to segregation, Sn even in a small amount may be enriched at the grain boundary, resulting in defects such as cracks. Therefore, the content of Sn element is strictly controlled in the traditional process. Because thin strip continuous casting has the characteristic of rapid solidification, interdendritic segregation of an element is greatly reduced. As a result, the solid solubility of the element can be increased greatly. Therefore, under the conditions of the thin strip continuous casting process, the content range of Sn element can be expanded, and the steelmaking cost can thus be reduced greatly. Fig. 2 shows the relationship between Sn element and average heat flux. It can be seen from Fig. 2 that when the amount of Sn added is less than 0.04%, there is little influence on the heat flux. That is, there is no influence on the solidification process of the thin strip. Fig. 3 shows the relationship between Sn content and surface roughness. Because cracks on the surface of a cast strip are usually generated at the uneven folds on the surface of the cast strip, surface roughness is used to characterize the occurrence of the surface cracks. If the roughness is large, the probability of cracking is high. It can be seen from Fig. 3 that the increase of the Sn content has no adverse influence on the surface quality of the cast strip under the condition of rapid solidification. As it can be seen from the results in Figs. 2 and 3, Sn has no adverse influence on the solidification and surface quality of the cast strip. Therefore, according to the present invention, the limitation to the Sn content may be further relaxed, and when added, the designed Sn content is in the range of 0.005-0.04%.

B: The notable role of B in the steel is that a minute amount of boron can multiply the hardenability of the steel. B may allow for preferential precipitation of coarse BN particles in high-temperature austenite, thereby inhibiting precipitation of fine AlN, weakening the pinning effect of the fine AlN on grain boundaries, and promoting the growth ability of grains. Hence, austenite grains are coarsened. This is beneficial to subsequent martensitic transformation. In addition, the combination of B and N can effectively prevent occurrence of a low-melting point phase of $B_2O_3$ at grain boundaries.

B is an active element that is prone to segregation, and it tends to segregate at the grain boundary. When B-containing steel is produced by the traditional process, the B content is generally controlled very strictly, usually around 0.001-0.003%. In the thin strip continuous casting process, the solidification and cooling rate is fast. Hence, the segregation of B can be inhibited effectively, and more B can be solid dissolved. Therefore, the limitation to the B content can be relaxed appropriately. Coarse BN particles can also be produced by controlling the process appropriately to inhibit precipitation of fine AlN. In this way, B plays a role in nitrogen fixation. As shown by other studies, when B is added in combination with Nb and Mo, better effects can be achieved. Particularly, the possibility of segregation of C atoms may be decreased, and the precipitation of $Fe_{23}(C,B)_6$ at grain boundaries may be avoided. Hence, it is possible to add more B. Therefore, when B is added, a higher B content is used in the present invention than in the traditional process, and the range is 0.001-0.006%.

A manufacturing method for the martensitic steel strip according to the present invention comprises the following steps:

1) Smelting, continuous casting

wherein smelting is performed on the above composition; wherein a basicity $a=CaO/SiO_2$ (mass ratio) for slagging in a steelmaking process is controlled at $a<1.5$, preferably $a<1.2$, or $a=0.7-1.0$; wherein a $MnO$-$SiO_2$-$Al_2O_3$ ternary inclusion is present in molten steel, and a $MnO/SiO_2$ ratio (mass ratio) in the $MnO$-$SiO_2$-$Al_2O_3$ ternary inclusion is controlled at 0.5-2, preferably 1-1.8; wherein a free oxygen content $[O]_{Free}$ in the molten steel is 0.0005-0.005%;

wherein twin-roll thin strip continuous casting is used for the continuous casting to form a 1.5-3 mm thick cast strip; wherein crystallization rolls have a diameter of 500-1500 mm, preferably 800 mm; wherein water is supplied to an inside of the crystallization rolls for cooling; wherein a casting machine has a casting speed of 60-150 m/min; wherein a two-stage system for dispensing and distributing molten steel is used for molten steel delivery in the continuous casting, i.e., a tundish + a distributor;

2) Lower closed chamber protection

wherein after a cast strip exits the crystallization rolls, the cast strip has a temperature of 1420-1480 °C, and it enters a lower closed chamber directly, wherein a non-oxidizing gas is supplied to the lower closed chamber, wherein an oxygen concentration in the lower closed chamber is controlled at <5%; and wherein the cast strip has a temperature of 1150-1300 °C at an outlet of the lower closed chamber;

3) On-line hot rolling

wherein the cast strip is delivered through pinch rolls in the lower closed chamber to a rolling mill, and rolled into a steel strip having a thickness of 0.8-2.5 mm at a rolling temperature of 1100-1250°C and a hot rolling reduction rate controlled at 10-50%, preferably 20-50%, more preferably 30-50%, wherein the hot-rolled steel strip has a thickness of 0.8-2.5 mm, preferably 1.0-1.8 mm;

4) Post-rolling cooling

wherein the steel strip is subjected to post-rolling cooling after the on-line hot rolling, wherein the steel strip is cooled to 300 °C or less by gas atomization rapid quenching, wherein the gas atomization rapid cooling is performed at a cooling rate of ≥120°C/s to cool the steel strip to 300 °C or less rapidly, wherein after the cooling, the steel strip has a microstructure of martensite (M), or martensite (M)+bainite (B), wherein when the microstructure is martensite (M)+bainite (B), martensite (M) has a volume fraction of at least 75%;

5) Coiling of the steel strip

wherein after a poor-quality head portion of the hot-rolled and cooled steel strip is cut off with a head shear, the steel strip is directly coiled into a coil.

Further, the manufacturing method also comprises step 6): follow-up heat treatment, wherein the steel coil produced is subjected to isothermal tempering treatment at an isothermal tempering temperature of 200-350 °C for an isothermal tempering time of 1-4 h; or the steel coil produced enters a continuous annealing production line for aging treatment at an aging temperature of 300-650 °C for an aging time of 2-12 min in the continuous annealing.

Preferably, in step 1), 100% steel scrap may be selected as the raw material for the smelting without pre-screening, and an electric furnace is used for the smelting to produce molten steel. Alternatively, a converter is used for the smelting, wherein steel scrap is added to the converter in an amount of at least 20% of the raw material for the smelting without pre-screening. Then, the molten steel is delivered to an LF furnace, VD/VOD furnace or RH furnace for refining.

Preferably, in step 2), the non-oxidizing gas includes an inert gas, $N_2$, or a mixed gas of $CO_2$ gas produced by sublimation of dry ice, $N_2$ and $H_2$.

Preferably, in step 4), the gas atomization cooling utilizes a gas-water ratio of 15:1-10:1, a gas pressure of 0.5-0.8 MPa, and a water pressure of 1.0-1.5 MPa. As used herein, the gas-water ratio refers to the flow ratio of compressed air to water, and the unit of the flow is $m^3/h$.

Preferably, in step 5), the coiling utilizes double-coiler coiling or Carrousel coiling.

In the manufacturing method of the martensitic steel strip according to the present invention:
In order to improve the castability of the molten steel for thin strip continuous casting, the basicity $a=CaO/SiO_2$ for slagging in the steelmaking process is controlled at $a<1.5$, preferably $a<1.2$, or $a=0.7-1.0$.

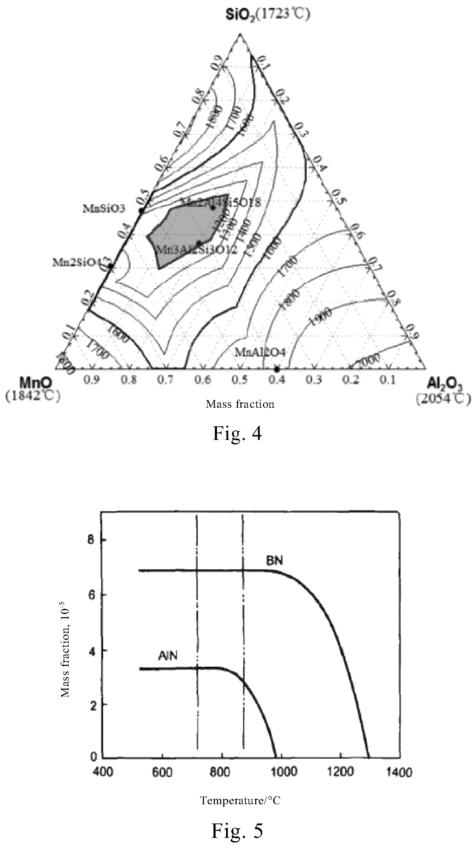

In order to improve the castability of the molten steel for thin strip continuous casting, it is necessary to obtain a low-melting-point $MnO-SiO_2-Al_2O_3$ ternary inclusion, as shown in the shaded area in Fig. 4. The $MnO/SiO_2$ in the $MnO-SiO_2-Al_2O_3$ ternary inclusion is controlled at 0.5-2, preferably 1-1.8.

In order to improve the castability of the molten steel for thin strip continuous casting, O is an essential element to form an oxide inclusion in the steel. Since it's necessary to form the low-melting-point $MnO-SiO_2-Al_2O_3$ ternary inclusion according to the present invention, the free oxygen content $[O]_{Free}$ in the molten steel is required to be in the range of 0.0005-0.005%.

In order to improve the castability of the molten steel for thin strip continuous casting, among the above components, Mn and S must be controlled to satisfy the following relationship: $Mn/S>250$.

After the cast strip exits the crystallization rolls, the cast strip has a temperature of 1420-1480 °C, and it enters a lower closed chamber directly, wherein a non-oxidizing gas is supplied to the lower closed chamber, wherein an oxygen concentration in the lower closed chamber is controlled at <5%; wherein the anti-oxidation protection provided by the lower closed chamber to the cast strip extends to the inlet of the rolling mill; and wherein the cast strip has a temperature of 1150-1300 °C at an outlet of the lower closed chamber.

When B is present, the theoretical basis for precipitation of the BN phase in the cast strip occurring in the lower closed process is as follows:
The thermodynamic equations between boron and nitrogen, and between aluminum and nitrogen in γ-Fe in steel are as follows:

$$BN=B+N; \quad Log[B][N]=-13970/T+5.24 \qquad (1)$$

$$AlN=Al+N; \quad Log[Al][N]=-6770/T+1.03 \qquad (2)$$

As shown by Fig. 5, the temperature at which BN begins to precipitate in the steel is around 1280 °C, and the precipitation of BN levels off at 980 °C, while the precipitation of AlN has just begun (the temperature at which AlN begins to precipitate is around 980 °C). The precipitation of BN precedes AlN thermodynamically. Therefore, with the use of reasonable process control measures according to the present invention, the combination of B and N is completed in a lower enclosed chamber to generate coarse BN particles, thereby homogenizing the structure of austenite grains. This inhibits precipitation of fine AlN, and thus weakens the pinning effect of fine AlN on the grain boundary, so that the growth ability of grains is improved, and austenite grains are coarsened. As a result, subsequent martensite transformation is favored. In addition, the combination of B and N can effectively prevent appearance of the low-melting-point phase $B_2O_3$ at the grain boundary.

Post-rolling cooling is performed on the on-line hot-rolled steel strip. Particularly, gas atomization rapid quenching is performed for the cooling to cool the strip steel to 300 °C or less. The gas atomization cooling process can effectively reduce the thickness of the oxide scale on the strip steel surface, improve the temperature uniformity of the strip steel, and promote the surface quality of the strip steel. The gas atomization cooling utilizes a gas-water ratio of 15:1-10:1, a gas pressure of 0.5-0.8 MPa, and a water pressure of 1.0-1.5 MPa. After gas atomization, a high-pressure water mist is formed and sprayed on the surface of the steel strip. On the one hand, it plays a role in reducing the temperature of the steel strip. On the other hand, the water mist forms a dense gas film which covers the surface of the strip steel to protect the strip steel from oxidation, thereby effectively suppressing the growth of the oxide scale on the surface of the hot-rolled strip steel. With the use of this cooling process, the problems caused by traditional spraying or laminar cooling can be avoided, and the surface temperature of the strip steel can drop uniformly, so as to increase the temperature uniformity of the strip steel, and achieve the effect of homogenizing the internal microstructure. At the same time, the cooling is uniform, and the shape quality and performance stability of the strip steel can be improved. In addition, the thickness of the oxide scale on the surface of the strip steel can be reduced effectively. The cooling rate of the gas atomization rapid cooling is in the range of ≥120 °C/s. The strip steel is cooled to 300°C or less rapidly. After the cooling, the microstructure of the steel strip is martensite (M), or martensite (M) + bainite (B), wherein when the microstructure is martensite (M) + bainite (B), the volume fraction of martensite (M) is at least 75%. In some embodiments, the cooling rate is in the range of 120-175°C/s.

After the poor-quality head portion of the hot-rolled and cooled strip steel is cut off with a head shear, the strip steel is directly coiled into a coil. The coiling utilizes double-coiler coiling or Carrousel coiling to ensure continuous production of strip steel. The coiling temperature may be in the range of 250-300 °C.

Optionally, the steel coil produced may be subjected to isothermal tempering treatment, wherein the isothermal tempering temperature is 200-350 °C, and the isothermal tempering time is 1-4 h; or the steel coil produced may enter a continuous annealing production line for aging treatment, wherein the aging temperature is 300-650 °C, and the aging time is 2-12 min in the continuous annealing.

After the above manufacturing process, the final martensitic steel strip has a yield strength of 800-1200 MPa, a tensile strength of 1100-1900 MPa, and an elongation of 3-13%, for example 3-12%. In some embodiments, the martensitic steel strip according to the present invention has a yield strength of 820-1170 MPa, a tensile strength of 1200-1800 MPa, and an elongation of 3-13%.

Compared with the prior art, the present invention has the following differences and improvements:

The most significant features which distinguish the present invention from the existing thin strip continuous casting technology include the roll diameter of the crystallization roll and the corresponding molten steel distribution mode. The technical feature of the EUROSTRIP technology is the crystallization rolls having a large diameter of Φ1500mm. Due to the large crystallization rolls together with the large capacity of the molten pool, it's easy to distribute the molten steel, but the cost for manufacturing the crystallization rolls and the cost for operation and maintenance are high. The technical feature of the CASTRIP technology is the crystallization rolls having a small diameter of Φ500mm. Due to the small crystallization rolls together with the small capacity of the molten pool, it's difficult to distribute the molten steel, but the cost for manufacturing the casting machine and the cost for operation and maintenance are low. In order to address the challenge of uniform distribution of molten steel in the small molten pool, CASTRIP adopts a three-stage system for dispensing and distributing molten steel (a tundish + a transition piece + a distributor). The use of a three-stage distribution system for molten steel leads to a direct increase in the cost of refractory materials. More importantly, the three-stage distribution system for molten steel extends the flow path of the molten steel, and the temperature drop of the molten steel is also larger. In order to achieve the required temperature of the molten steel in the molten pool, the tapping temperature needs to be increased greatly. The increased tapping temperature will lead to problems such as increased steelmaking cost, increased energy consumption and shortened life of refractory materials.

The crystallization rolls according to the present invention have a diameter of 500-1500 mm, with crystallization rolls having a roll diameter of 800mm being preferred. A two-stage system for dispensing and distributing molten steel (a tundish + a distributor) is adopted. The molten steel flowing out of the distributor forms different distribution patterns along the roll surfaces and the two side surfaces, and flows in two paths without interfering with each other. Due to the use of a two-stage distribution system, in contrast to a three-stage distribution system, the cost of refractory materials is reduced greatly; and the flow path of the molten steel is shortened, so that the temperature drop of the molten steel is reduced, and the tapping temperature can be lowered. Compared with the three-stage distribution system, the tapping temperature can be lowered by 30-50 °C. The decreased tapping temperature can effectively reduce the cost of steelmaking, save energy and prolong the life of refractory materials. The combined use of crystallization rolls having a preferred roll diameter of Φ800mm and a two-stage system for dispensing and distributing molten steel according to the present invention not only meets the requirement of stable distribution of molten steel, but also achieves the goals of simple structure, convenient operation and low processing cost.

The prior art production of thin strip products by thin strip continuous casting and the corresponding processes are reported in many patents. However, the production of B-containing martensitic steel by thin strip continuous casting has not been reported yet. Nevertheless, it is considered that the following patents are comparable to the present invention in terms of process control and equipment. The details are as follows:

International Patent Publication WO 2016/100839 A1 discloses a martensitic steel and a manufacturing method thereof. The following composition by weight percentage are used in this patent publication: C=0.20%-0.35%, Cr<1.0%, Mn=0.7%-2.0%, Si=0.10%-0.50%, Cu=0.1%-1.0%, Nb<0.05 %, Mo<0.5%, Al<0.01%, and a balance of Fe and unavoidable impurities caused by smelting. Cu is mentioned among the chemical elements in this patent publication, but Sn and B are not mentioned. In the claims in this patent publication, the molten steel solidifies under a heat flow of higher than 10.0 MW/m$^2$ to form a steel strip having a thickness of <2.0mm, and the reduction rate of the on-line hot rolling is 15-50%. Rapid cooling is performed after the rolling, so that the strip steel has a microstructure of martensite or martensite+bainite with a volume fraction of martensite being at least 75%. It only mentions post-rolling rapid cooling, and it is silent on any way to achieve rapid cooling.

Chinese Patent Publication CN 108 359 909 B discloses a method for preparing a martensitic steel having high strength and toughness by a thin strip casting, rolling and aging process. The following composition by weight percentage are used in this patent publication: C=0.1%-0.3%, Mn=0.7%-2.5%, Si=0.05%-0.8%, Mo=0.05-0.8%, V=0.01-0.3%, Nb= 0.01-0.09%, Cr=0.1-0.8%, P<0.02%, S≤0.02%, and a balance of Fe and unavoidable impurities. The chemical elements in this patent publication do not include Cu, Sn, B, etc. An important feature of the patent publication is that the steel strip must be aged to improve the properties of the steel.

International Patent Applications WO 2008/137898 A1, WO 2008/137899 A1, WO 2008/137900 A1, and Chinese Patent Applications CN200880023157.9 (CN 101 765 469 A), CN200880023167.2 (CN 101 765 470 A), CN200880023586.6 (CN 101 795 792 A) disclose a method of producing a micro-alloyed thin steel strip having a thickness of 0.3-3 mm by using a thin strip continuous casting and rolling process. The chemical composition used in this method are C: ≤ 0.25%, Mn: 0.20-2.0%, Si: 0.05-0.50%, Al: ≤ 0.01%, and also at least one of Nb: 0.01-0.20%, V: 0.01-0.20%, and Mo: 0.05-0.50%. Under the conditions of hot rolling reduction rate of 20-40% and coiling temperature of ≤700°C, the microstructure of the hot-rolled strip is bainite + acicular ferrite. According to the above patent applications, the alloy elements mainly existing in a solid solution state in the cast strip inhibit recrystallization of austenite after hot rolling. Even if the reduction rate reaches 40%, the recrystallization of austenite is also very limited. Since the hot rolling reduction rate of 20-40% does not cause recrystallization of austenite, the hardenability of coarse austenite remains after hot rolling, so that the structure of bainite + acicular ferrite is obtained at room temperature. No temperature range used for hot rolling is disclosed by the above patent applications. Nevertheless, an article (C.R. Killmore, etc. Development of Ultra-Thin Cast Strip Products by the CASTRIP® Process. AIS Tech, Indianapolis, Indiana, USA, May 7-10, 2007) related to these patent applications reports that the temperature used for hot rolling is 950°C. Within the above composition system, the thin strip continuously cast low carbon micro-alloyed steel products produced by this method have a yield strength that can reach 650 MPa, a tensile strength that can reach 750 MPa, and an elongation of ≤6% or 10%. The thin strip continuous casting process is generally followed by only 1-2 rolling mills, and the hot rolling reduction rate is usually difficult to exceed 50%. Hence, deformation has little effect in refining grains. If austenite grains are not refined by recrystallization, the nonuniform austenite structure is difficult to be effectively improved after hot rolling, and the bainite + acicular ferrite structure produced by transformation of unevenly sized austenite is also very uneven, so the elongation is not high.

Chinese Patent Publication 02825466.X (CN 1606629 A) proposes another method for producing a micro-alloyed thin steel strip having a thickness of 1-6 mm using the thin strip continuous casting and rolling process. The micro-alloyed steel composition system used in this method comprises C: 0.02-0.20%, Mn: 0.1-1.6%, Si: 0.02-2.0%, Al: ≤0.05%, S: ≤ 0.03%, P: ≤ 0.1%, Cr: 0.01-1.5%, Ni: 0.01-0.5%, Mo: ≤0.5%, N: 0.003-0.012%, and a balance of Fe and unavoidable impurities. The hot rolling of the cast strip is performed in the range of 1150-(Ar1-100)°C, corresponding to hot rolling in the austenite region, the austenitic-ferrite two-phase region, or the ferrite region. The hot rolling reduction rate is 15- 80%. In this method, an on-line heating system is designed to be positioned after the thin strip continuous casting and rolling unit, and the heating temperature range is 670-1150 °C. The purpose is that, after the steel strip is hot rolled in different phase regions, the temperature of the steel strip can be held for a period of time to allow for complete recrystallization, so that the steel strip can obtain better matched strength and plasticity. When this method is used for production, it is necessary to add an on-line heating system in the design of the production line. Because the length of the heating time depends on the strip speed and the length of the heating furnace, the heating furnace must be long enough to ensure heating uniformity. This not only increases the investment cost, but also significantly increases the footprint of the thin strip casting and rolling line, reducing the advantages of the line.

The main advantages of the present invention include:

1. According to the present invention, a thin strip continuous casting technology is used to produce martensitic steel comprising tin (Sn) and copper (Cu)/comprising tin (Sn), copper (Cu) and boron (B), which has not been reported so far.

2. According to the present invention, complicated processes such as slab heating, multi-pass repeated hot rolling and the like are obviated. With the use of a twin-roll thin strip continuous casting + one-pass on-line hot rolling process, the production process is shorter, the efficiency is higher, and the investment cost for the production line and the production cost are reduced significantly.

3. According to the present invention, a good number of complicated intermediate steps in the traditional process for producing a martensitic steel strip are obviated. Compared with the traditional process for producing a cold-rolled martensitic steel strip, the energy consumption and the CO2 emission in the production according to the present invention are reduced greatly, and green products are obtained.

4. According to the present invention, a thin strip continuous casting process is used to produce hot-rolled thin-gauge martensitic steel, wherein the cast strip itself has a relatively thin thickness, and it is hot rolled on-line to a desired product thickness. So, the production of the thin-gauge product does not require cold rolling, and the product may be marketed directly for use. The purpose of supplying thin-gauge, hot-rolled plates and "replacing cold rolling with hot rolling" can be achieved, and the cost-effectiveness of the plates and strips can be improved significantly.

5. In some embodiments according to the present invention, with the addition of a trace amount of boron element to preferentially precipitate coarse BN particles in high-temperature austenite and inhibit precipitation of fine AIN, the pinning effect of fine AIN on the grain boundary is attenuated, and the growth ability of grains is promoted. As a result, the austenite grains are coarsened and homogenized. This is conducive to subsequent martensite transformation.

6. Steel scrap containing Cu and Sn is used according to the present invention to "turn harm into benefit" for Cu and Sn in the steel, so as to make full use of the existing steel scrap, or low quality or poor quality mineral resources (high tin ore, high copper ore). As such, the recycling of steel scrap can be promoted; the production cost can be reduced; and the sustainable development of the steel industry can be realized.

7. According to the present invention, an electric furnace is used for smelting, and 100% of the raw material to be smelted may be steel scrap in a true sense. Thus, a pre-screening step is obviated, and the raw material cost can be reduced greatly. If a converter is used for smelting, steel scrap may be added to the converter in an amount of 20% or more of the raw material to be smelted without pre-screening. This maximizes the proportion of steel scrap in the raw material charged into the converter, and thus reduces the smelting cost and energy consumption greatly.

8. According to the present invention, by using gas atomization rapid cooling for the rolled strip steel, the problems caused by traditional spraying or laminar cooling can be avoided, and the surface temperature of the strip steel can drop uniformly, so as to increase the temperature uniformity of the strip steel, and achieve the effect of homogenizing the internal microstructure. At the same time, the cooling is uniform, and the shape quality and performance stability of the strip steel can be improved. In addition, the thickness of the oxide scale on the surface of the strip steel can be reduced effectively.

9. In the traditional process for cooling a slab, precipitation of alloying elements occurs, and re-dissolution of the alloying elements is insufficient when the slab is reheated, so that the utilization rate of the alloying elements is often reduced. In the thin strip continuous casting process according to the present invention, the high-temperature cast strip is hot rolled directly, and the added alloy elements mainly exist in a solid solution state. Thus, the utilization rate of the alloy elements can be increased.

10. According to the present invention, a Carrousel coiler is used for the hot-rolled steel strip to effectively shorten the length of the production line. At the same time, the in-situ coiling can greatly improve the control accuracy of the coiling temperature and improve the stability of the product properties.

## Description of the Drawings

Fig. 1 is a schematic view showing the process layout of a twin-roll thin strip continuous casting process;
Fig. 2 is a schematic diagram showing the relationship between Sn content and average heat flux;
Fig. 3 is a schematic diagram showing the relationship between Sn content and cast strip surface roughness;
Fig. 4 is a ternary phase diagram of $MnO-SiO_2-Al_2O_3$ (shaded area: low melting point area);
Fig. 5 is a schematic diagram showing thermodynamic precipitation curves of BN and AIN.

## Detailed Description

The present invention will be further described with reference to the following examples, but these examples by no means limit the present invention.

Referring to Fig. 1, the molten steel that conforms to the chemical composition designed according to the present invention passes through a ladle 1, a ladle shroud 2, a tundish 3, a submerged nozzle 4 and a distributor 5, and is then directly poured into a molten pool 7 formed with side sealing devices 6a, 6b and two counter-rotating crystallization rolls 8a, 8b capable of rapid cooling. The molten steel solidifies on the circumferential surfaces of the rotating crystallization rolls 8a, 8b to form a solidified shell which gradually grows, and then forms a 1.5-3 mm thick cast strip 11 at the minimum gap (nip point) between the two crystallization rolls. After the cast strip 11 exits the crystallization rolls 8a and 8b, the temperature of the cast strip is 1420-1480°C, and the cast strip enters a lower closed chamber 10 directly. The lower closed chamber 10 is supplied with an inert gas to protect the strip steel, i.e. protecting the strip steel from oxidation. The anti-oxidation protective atmosphere may be $N_2$, or Ar, or other non-oxidizing gas, such as $CO_2$ gas obtained by sublimation of dry ice. The oxygen concentration in the lower closed chamber 10 is controlled to be <5%. The anti-oxidation protection provided by the lower closed chamber 10 to the cast strip 11 extends to the inlet of the rolling mill 13. The temperature of the cast strip at the outlet of the lower closed chamber 10 is 1150-1300°C. Then, the cast strip is delivered to the hot rolling mill 13 through a swinging guide plate 9, pinch rolls 12 and a roll table 15. After hot rolling, a hot rolled strip of 0.8-2.5 mm in thickness is formed. Post-rolling cooling is performed with the use of a gas atomization rapid cooling device 14 to cool the strip steel to 300 °C or less to improve the temperature uniformity of the strip steel. After the head portion of the strip steel is cut off by a flying shear 16, the cut head portion falls into a flying shear pit 18 along a flying shear guide plate 17, and the hot-rolled strip with the head portion cut off enters a coiler 19 for coiling. After the steel coil is taken off the coiler, it is cooled in air to room temperature.

In addition, the steel coil produced may also be subjected to isothermal tempering treatment, or enters a continuous annealing production line for aging treatment.

The chemical compositions of the Examples according to the present invention are shown in Table 1, wherein the balance is Fe and other unavoidable impurities. The process parameters of the manufacturing method according to the present invention are shown in Table 2, and the mechanical properties of the hot-rolled strips obtained finally are shown in Table 3.

To sum up, the martensitic steel manufactured from the steel composition in the designed scope provided according to the present invention using the thin strip continuous casting technology has a yield strength of 800-1200 MPa, a tensile strength of 1100-1900 MPa, and an elongation of 3-13%, for example 3-12%. The cold working bending performance of the martensitic steel is qualified. It can be widely used in the field of high-strength automotive steel, such as safety components for body collision protection, for example, bumpers, anti-collision beams, etc. In the automotive industry, it provides broad room for weight reduction, energy saving and fuel economy improvement.

Table 1: Chemical compositions of the steel Examples (wt.%)

|  | C | Si | Mn | P | S | N | O | Als | Nb | Mo | Cu | Sn |
|---|---|---|---|---|---|---|---|---|---|---|---|---|
| Ex. 1 | 0.220 | 0.24 | 1.35 | 0.008 | 0.004 | 0.0074 | 0.0093 | 0.0009 | 0.03 | 0.14 | 0.32 | 0.024 |
| Ex. 2 | 0.174 | 0.10 | 0.90 | 0.013 | 0.003 | 0.0061 | 0.0110 | 0.0006 | 0.02 |  | 0.14 | 0.005 |
| Ex. 3 | 0.180 | 0.35 | 1.28 | 0.015 | 0.004 | 0.0058 | 0.0150 | 0.0004 | 0.05 |  | 0.10 |  |
| Ex. 4 | 0.178 | 0.27 | 1.10 | 0.013 | 0.004 | 0.0087 | 0.0130 | 0.0008 |  | 0.35 | 0.56 | 0.040 |
| Ex. 5 | 0.224 | 0.45 | 0.65 | 0.009 | 0.002 | 0.0052 | 0.0120 | 0.0007 | 0.01 |  | 0.43 | 0.015 |
| Ex. 6 | 0.245 | 0.42 | 0.67 | 0.012 | 0.002 | 0.0046 | 0.0070 | 0.0008 |  | 0.40 |  | 0.024 |
| Ex. 7 | 0.160 | 0.19 | 0.85 | 0.015 | 0.003 | 0.0040 | 0.0100 | 0.0005 | 0.06 |  | 0.37 | 0.035 |
| Ex. 8 | 0.248 | 0.36 | 1.00 | 0.014 | 0.0038 | 0.0100 | 0.0085 | 0.0006 |  | 0.35 | 0.60 | 0.015 |
| Ex. 9 | 0.254 | 0.39 | 0.84 | 0.018 | 0.003 | 0.0078 | 0.0200 | 0.0003 | 0.04 |  | 0.39 |  |
| Ex. 10 | 0.260 | 0.44 | 0.40 | 0.020 | 0.001 | 0.0055 | 0.0125 | 0.0004 | 0.05 | 0.25 | 0.53 | 0.016 |
| Ex. 11 | 0.211 | 0.50 | 0.65 | 0.010 | 0.002 | 0.0090 | 0.0090 | 0.0005 | 0.04 |  |  | 0.037 |
| Ex. 12 | 0.175 | 0.28 | 1.70 | 0.012 | 0.0067 | 0.0085 | 0.0118 | 0.0003 | 0.08 | 0.10 | 0.36 | 0.012 |
| Ex. 13 | 0.196 | 0.44 | 1.37 | 0.018 | 0.004 | 0.0045 | 0.0132 | 0.0006 |  | 0.34 |  | 0.033 |
| Ex. 14 | 0.244 | 0.25 | 1.40 | 0.017 | 0.003 | 0.0064 | 0.0075 | 0.0005 | 0.04 | 0.20 | 0.27 | 0.028 |

Table 2: Process parameters of the Examples

|  | Cast strip thickness mm | Atmosphere in lower closed chamber | Oxygen concentration in lower closed chamber/% | Hot rolling temperature, °C | Hot rolling reduction rate, % | Hot-rolled strip thickness mm | Post-rolling cooling rate, °C/s | Coiling temperature, °C |
|---|---|---|---|---|---|---|---|---|
| Ex. 1 | 2.2 | $N_2$ | 3.5 | 1180 | 32 | 1.50 | 135 | 290 |
| Ex. 2 | 2.4 | Ar | 4.2 | 1220 | 48 | 1.25 | 130 | 300 |
| Ex. 3 | 2.3 | $N_2$ | 2.5 | 1200 | 48 | 1.20 | 130 | 260 |
| Ex. 4 | 1.9 | $CO_2$ | 2.7 | 1150 | 34 | 1.25 | 120 | 250 |
| Ex. 5 | 1.5 | Ar | 3.5 | 1185 | 33 | 1.00 | 132 | 280 |
| Ex. 6 | 2.6 | Ar | 2.8 | 1100 | 42 | 1.50 | 172 | 270 |
| Ex. 7 | 1.9 | $N_2$ | 1.5 | 1190 | 21 | 1.50 | 165 | 280 |
| Ex. 8 | 1.7 | $CO_2$ | 0.8 | 1220 | 26 | 1.25 | 150 | 290 |
| Ex. 9 | 1.5 | $N_2$ | 1.5 | 1250 | 33 | 1.00 | 122 | 270 |
| Ex. 10 | 2.0 | $N_2$ | 1.9 | 1170 | 30 | 1.40 | 175 | 260 |

(continued)

|  | Cast strip thickness mm | Atmosphere in lower closed chamber | Oxygen concentration in lower closed chamber/% | Hot rolling temperature, °C | Hot rolling reduction rate, % | Hot-rolled strip thickness mm | Post-rolling cooling rate, °C/s | Coiling temperature, °C |
|---|---|---|---|---|---|---|---|---|
| Ex. 11 | 2.6 | Ar | 1.8 | 1240 | 42 | 1.50 | 130 | 275 |
| Ex. 12 | 2.3 | $N_2$ | 2.6 | 1170 | 46 | 1.25 | 160 | 285 |
| Ex. 13 | 2.0 | $CO_2$ | 2.4 | 1180 | 50 | 1.00 | 130 | 290 |
| Ex. 14 | 1.7 | Ar | 2.5 | 1160 | 35 | 1.10 | 125 | 280 |

Table 3: Properties of the steel products in the Examples

|  | Cast strip thickness mm | Final product thickness mm | Yield strength MPa | Tensile strength MPa | Elongation % | 180°Bend diameter d=a (a is strip thickness) |
|---|---|---|---|---|---|---|
| Ex. 1 | 2.2 | 1.5 | 918 | 1565 | 7.5 | Pass |
| Ex. 2 | 2.4 | 1.25 | 1038 | 1750 | 8 | Pass |
| Ex. 3 | 2.3 | 1.2 | 1175 | 1685 | 10.5 | Pass |
| Ex. 4 | 1.9 | 1.25 | 1103 | 1778 | 6 | Pass |
| Ex. 5 | 1.5 | 1.0 | 1016 | 1674 | 5.5 | Pass |
| Ex. 6 | 2.6 | 1.5 | 835 | 1285 | 10 | Pass |
| Ex. 7 | 1.9 | 1.5 | 928 | 1475 | 5.5 | Pass |
| Ex. 8 | 1.7 | 1.25 | 1105 | 1865 | 7 | Pass |
| Ex. 9 | 1.5 | 1.0 | 1034 | 1653 | 8 | Pass |
| Ex. 10 | 2.0 | 1.4 | 1116 | 1674 | 11 | Pass |
| Ex. 11 | 2.6 | 1.5 | 953 | 1372 | 13 | Pass |
| Ex. 12 | 2.3 | 1.25 | 904 | 1338 | 9.5 | Pass |
| Ex. 13 | 2.0 | 1.0 | 1123 | 1559 | 3.5 | Pass |
| Ex. 14 | 1.7 | 1.1 | 1025 | 1690 | 6 | Pass |

The B-containing chemical compositions of the Examples according to the present invention are shown in Table 4, wherein the balance is Fe and other unavoidable impurities. The process parameters of the manufacturing method according to the present invention are shown in Table 5, and the mechanical properties of the hot-rolled strips obtained finally are shown in Table 6.

Table 4: Chemical compositions of the steel Examples (wt.%)

| Ex. No. | C | Si | Mn | P | S | N | O | Als | Nb | Mo | Cu | Sn | B |
|---|---|---|---|---|---|---|---|---|---|---|---|---|---|
| 15 | 0.210 | 0.23 | 1.35 | 0.008 | 0.004 | 0.0074 | 0.0093 | 0.0009 | 0.04 | 0.15 | 0.33 | 0.024 | 0.003 |
| 16 | 0.178 | 0.10 | 0.90 | 0.013 | 0.003 | 0.0061 | 0.0110 | 0.0006 | 0.02 |  | 0.15 | 0.005 | 0.001 |
| 17 | 0.190 | 0.34 | 1.28 | 0.015 | 0.004 | 0.0058 | 0.0150 | 0.0004 | 0.05 |  | 0.10 |  | 0.004 |
| 18 | 0.185 | 0.26 | 1.10 | 0.013 | 0.004 | 0.0087 | 0.0130 | 0.0008 |  | 0.33 | 0.55 | 0.040 | 0.006 |
| 19 | 0.244 | 0.44 | 0.65 | 0.009 | 0.002 | 0.0052 | 0.0120 | 0.0007 | 0.01 |  | 0.44 | 0.014 | 0.003 |
| 20 | 0.255 | 0.40 | 0.67 | 0.012 | 0.002 | 0.0046 | 0.0070 | 0.0008 |  | 0.40 |  | 0.025 | 0.005 |
| 21 | 0.160 | 0.18 | 0.85 | 0.015 | 0.003 | 0.0040 | 0.0100 | 0.0005 | 0.06 |  | 0.37 | 0.035 | 0.003 |
| 22 | 0.248 | 0.37 | 1.00 | 0.014 | 0.0038 | 0.0100 | 0.0085 | 0.0006 |  | 0.35 | 0.60 | 0.015 | 0.002 |

(continued)

| Ex. No. | C | Si | Mn | P | S | N | O | Als | Nb | Mo | Cu | Sn | B |
|---|---|---|---|---|---|---|---|---|---|---|---|---|---|
| 23 | 0.226 | 0.36 | 0.84 | 0.018 | 0.003 | 0.0078 | 0.0200 | 0.0003 | 0.04 | | 0.38 | | 0.004 |
| 24 | 0.260 | 0.43 | 0.40 | 0.020 | 0.001 | 0.0055 | 0.0125 | 0.0004 | 0.05 | 0.25 | 0.52 | 0.016 | 0.006 |
| 25 | 0.211 | 0.50 | 0.65 | 0.010 | 0.002 | 0.0090 | 0.0090 | 0.0005 | 0.04 | | | 0.038 | 0.003 |
| 26 | 0.175 | 0.26 | 1.70 | 0.012 | 0.0067 | 0.0085 | 0.0118 | 0.0003 | 0.08 | 0.10 | 0.35 | 0.012 | 0.002 |
| 27 | 0.196 | 0.45 | 1.37 | 0.018 | 0.004 | 0.0045 | 0.0132 | 0.0006 | | 0.32 | | 0.032 | 0.005 |
| 28 | 0.244 | 0.27 | 1.40 | 0.017 | 0.003 | 0.0064 | 0.0075 | 0.0005 | 0.04 | 0.20 | 0.27 | 0.027 | 0.004 |

Table 5: Process parameters of the Examples

| Ex. No. | Cast strip thickness mm | Atmosphere in lower closed chamber | Oxygen concentration in lower closed chamber/% | Hot rolling temperature, °C | Hot rolling reduction rate % | Hot-rolled strip thickness mm | Post-rolling cooling rate, °C/s | Coiling temperature /°C |
|---|---|---|---|---|---|---|---|---|
| 15 | 2.1 | $N_2$ | 3.5 | 1180 | 29 | 1.50 | 135 | 290 |
| 16 | 2.5 | Ar | 4.2 | 1220 | 50 | 1.25 | 120 | 300 |
| 17 | 2.2 | $N_2$ | 2.5 | 1200 | 45 | 1.20 | 130 | 260 |
| 18 | 1.8 | $CO_2$ | 2.7 | 1150 | 31 | 1.25 | 120 | 250 |
| 19 | 1.5 | Ar | 3.5 | 1185 | 33 | 1.00 | 132 | 280 |
| 20 | 2.6 | Ar | 2.8 | 1100 | 42 | 1.50 | 172 | 270 |
| 21 | 1.9 | $N_2$ | 1.5 | 1190 | 21 | 1.50 | 165 | 280 |
| 22 | 1.6 | $CO_2$ | 0.8 | 1220 | 22 | 1.25 | 150 | 290 |
| 23 | 1.5 | $N_2$ | 1.5 | 1250 | 33 | 1.00 | 122 | 270 |
| 24 | 2.0 | $N_2$ | 1.9 | 1170 | 30 | 1.40 | 175 | 260 |
| 25 | 2.6 | Ar | 1.8 | 1240 | 42 | 1.50 | 130 | 275 |
| 26 | 2.2 | $N_2$ | 2.6 | 1170 | 43 | 1.25 | 160 | 285 |
| 27 | 2.0 | $CO_2$ | 2.4 | 1180 | 50 | 1.00 | 130 | 290 |
| 28 | 1.6 | Ar | 2.5 | 1160 | 31 | 1.10 | 125 | 280 |

Table 6: Properties of the steel products in the Examples

| Ex. No. | Cast strip thickness mm | Final product thickness mm | Yield strength MPa | Tensile strength MPa | Elongation % | 180°Bend diameter d=a (a is strip thickness) |
|---|---|---|---|---|---|---|
| 15 | 2.1 | 1.5 | 915 | 1565 | 8.5 | Pass |
| 16 | 2.5 | 1.25 | 1018 | 1750 | 6 | Pass |
| 17 | 2.2 | 1.2 | 1170 | 1685 | 11 | Pass |
| 18 | 1.8 | 1.25 | 1105 | 1778 | 7 | Pass |
| 19 | 1.5 | 1.0 | 1012 | 1674 | 5.5 | Pass |
| 20 | 2.6 | 1.5 | 827 | 1285 | 9 | Pass |
| 21 | 1.9 | 1.5 | 920 | 1475 | 6.5 | Pass |
| 22 | 1.6 | 1.25 | 1115 | 1865 | 8 | Pass |
| 23 | 1.5 | 1.0 | 1030 | 1653 | 7 | Pass |

(continued)

| Ex. No. | Cast strip thickness mm | Final product thickness mm | Yield strength MPa | Tensile strength MPa | Elongation % | 180°Bend diameter d=a (a is strip thickness) |
|---|---|---|---|---|---|---|
| 24 | 2.0 | 1.4 | 1118 | 1660 | 10 | Pass |
| 25 | 2.6 | 1.5 | 920 | 1385 | 12 | Pass |
| 26 | 2.2 | 1.25 | 909 | 1368 | 9.5 | Pass |
| 27 | 2.0 | 1.0 | 1110 | 1587 | 3.5 | Pass |
| 28 | 1.6 | 1.1 | 1025 | 1690 | 6 | Pass |

**Claims**

1. A martensitic steel strip comprising the following composition by weight percentage: C: 0.16-0.26%, Si: 0.1-0.5%, Mn: 0.4-1.7%, P≤0.02%, S≤0.007%, N: 0.004-0.010%, Als: <0.001%, optional B: 0.001-0.006%, total oxygen $[O]_T$: 0.007-0.020%; and a balance of Fe and other unavoidable impurities, and, at the same time, the following conditions are satisfied:

   it comprises one or both of Cu: 0.1-0.6% and Sn: 0.005-0.04%;
   it comprises one or both of Nb: 0.01-0.08% and Mo: 0.1-0.4%;
   Mn/S>250, wherein:

   martensite has a volume fraction of at least 75%,
   the martensitic steel strip has a thickness of 0.8-2.5 mm, and
   the martensitic steel strip has a yield strength of 800-1200 MPa, a tensile strength of 1100-1900 MPa, and an elongation of 3-13%.

2. The martensitic steel strip of claim 1, wherein the martensitic steel strip has a microstructure of martensite, or martensite + bainite.

3. The martensitic steel strip of claim 1, wherein the martensitic steel strip has a thickness of 1.0-1.8 mm.

4. The martensitic steel strip of claim 1, wherein the martensitic steel strip comprises both Cu: 0.1-0.6% and Sn: 0.005-0.04%.

5. A manufacturing method for the martensitic steel strip of any of claims 1-4, comprising the following steps:

   1) Smelting, continuous casting

   wherein smelting is performed on the composition defined by claim 1, wherein a basicity a=CaO/SiO$_2$ for slagging in a steelmaking process is controlled at a<1.5, preferably a<1.2, or a=0.7-1.0; wherein MnO/SiO$_2$ in a MnO-SiO$_2$-Al$_2$O$_3$ ternary inclusion in molten steel is controlled at 0.5-2, preferably 1-1.8; wherein a free oxygen content $[O]_{Free}$ in the molten steel is 0.0005-0.005%;
   wherein twin-roll thin strip continuous casting is used for the continuous casting to form a 1.5-3 mm thick cast strip; wherein crystallization rolls have a diameter of 500-1500 mm, preferably 800 mm; wherein water is supplied to an inside of the crystallization rolls for cooling; wherein a casting machine has a casting speed of 60-150 m/min; wherein a two-stage system for dispensing and distributing molten steel is used for molten steel delivery in the continuous casting, i.e., a tundish + a distributor;

   2) Lower closed chamber protection
   wherein after a cast strip exits the crystallization rolls, the cast strip has a temperature of 1420-1480 °C, and it enters a lower closed chamber directly, wherein a non-oxidizing gas is supplied to the lower closed chamber, wherein an oxygen concentration in the lower closed chamber is controlled at <5%; and wherein the cast strip has a temperature of 1150-1300 °C at an outlet of the lower closed chamber;
   3) On-line hot rolling

wherein the cast strip is delivered through pinch rolls in the lower closed chamber to a rolling mill, and rolled into a steel strip having a thickness of 0.8-2.5 mm at a rolling temperature of 1100-1250°C and a hot rolling reduction rate of 10-50%, preferably 20-50%, wherein the hot-rolled steel strip has a thickness of 0.8-2.5 mm, preferably 1.0-1.8 mm;

4) Post-rolling cooling

wherein the strip steel is subjected to post-rolling cooling after the on-line hot rolling,
wherein the strip steel is cooled to 300 °C or less by gas atomization rapid quenching,
wherein the gas atomization rapid cooling is performed at a cooling rate of ≥120°C/s to cool the steel strip to 300 °C or less rapidly, wherein after the cooling, the steel strip has a microstructure of martensite, or martensite+bainite;

5) Coiling of the steel strip
wherein after a poor-quality head portion of the hot-rolled and cooled strip steel is cut off with a head shear, the strip steel is directly coiled into a coil.

6. The manufacturing method for the martensitic steel strip according to claim 5, wherein the manufacturing method further comprises step 6): follow-up heat treatment, wherein the steel coil produced is subjected to isothermal tempering treatment at an isothermal tempering temperature of 200-350 °C for an isothermal tempering time of 1-4 h; or the steel coil produced enters a continuous annealing production line for aging treatment at an aging temperature of 300-650 °C for an aging time of 2-12 min in the continuous annealing.

7. The manufacturing method for the martensitic steel strip according to claim 5, wherein in step 1), an electric furnace is used for the smelting to produce molten steel, wherein 100% steel scrap is used as a raw material for the smelting without pre-screening; alternatively, a converter is used for the smelting, wherein steel scrap is added to the converter in an amount of at least 20% of the raw material for the smelting without pre-screening; wherein the molten steel is then delivered to an LF furnace, VD/VOD furnace or RH furnace for refining.

8. The manufacturing method for the martensitic steel strip according to claim 5, wherein in step 2), the non-oxidizing gas comprises an inert gas, $N_2$, Ar, or a mixed gas of $CO_2$ gas produced by sublimation of dry ice, $N_2$ and $H_2$.

9. The manufacturing method for the martensitic steel strip according to claim 5, wherein in step 4), the gas atomization cooling utilizes a gas-water flow ratio of 15:1-10:1, a gas pressure of 0.5-0.8 MPa, and a water pressure of 1.0-1.5 MPa.

10. The manufacturing method for the martensitic steel strip according to claim 5, wherein in step 5), the coiling utilizes double-coiler coiling or Carrousel coiling.

11. The manufacturing method for the martensitic steel strip according to claim 5, wherein the cooling rate in step 4) is 120-175 °C/s, and the coiling temperature in step 5) is 250-300 °C.

**Patentansprüche**

1. Martensitisches Stahlband mit der folgenden Zusammensetzung in Gewichtsprozent:
C: 0,16-0,26 %, Si: 0,1-0,5 %, Mn: 0,4-1,7 %, P ≤ 0,02 %, S ≤ 0,007 %, N: 0,004-0,010 %, Als: <0,001 %, optional B: 0,001-0,006 %, Gesamtsauerstoff $[O]_T$: 0,007-0,020 %; und der Rest aus Fe und anderen unvermeidbaren Verunreinigungen, wobei gleichzeitig die folgenden Bedingungen erfüllt sind:

es enthält eines oder beide von: Cu: 0,1-0,6 % und Sn: 0,005-0,04 %;
es enthält eines oder beide von: Nb: 0,01-0,08 % und Mo: 0,1-0,4 %;
Mn/S > 250, wobei:

Martensit einen Volumenanteil von mindestens 75 % aufweist,
das martensitische Stahlband eine Dicke von 0,8 bis 2,5 mm aufweist, und
das martensitische Stahlband eine Streckgrenze von 800 bis 1200 MPa, eine Zugfestigkeit von 1100 bis 1900 MPa und eine Dehnung von 3 bis 13 % aufweist.

**2.** Das martensitische Stahlband nach Anspruch 1, wobei das martensitische Stahlband eine Mikrostruktur aus Martensit oder Martensit + Bainit aufweist.

**3.** Das martensitische Stahlband nach Anspruch 1, wobei das martensitische Stahlband eine Dicke von 1,0 bis 1,8 mm aufweist.

**4.** Das martensitische Stahlband gemäß Anspruch 1, wobei das martensitische Stahlband sowohl Cu: 0,1-0,6 % als auch Sn: 0,005-0,04 % umfasst.

**5.** Verfahren zur Herstellung des martensitischen Stahlbandes nach einem der Ansprüche 1 bis 4, das die folgenden Schritte umfasst:

1) Schmelzen, Strangguss

wobei das Schmelzen an der in Anspruch 1 definierten Zusammensetzung durchgeführt wird, wobei eine Basizität $a=CaO/SiO_2$ für die Schlackebildung in einem Stahlherstellungsprozess auf $a<1,5$, vorzugsweise $a<1,2$ oder $a=0,7-1,0$ geregelt wird; wobei $MnO/SiO_2$ in einem $MnO-SiO_2-Al_2O_3$ ternären Einschluss in geschmolzenem Stahl auf 0,5-2, vorzugsweise 1-1,8, geregelt wird; wobei ein Gehalt an freiem Sauerstoff $[O]_{Free}$ im geschmolzenen Stahl 0,0005-0,005 % beträgt; wobei ein Doppelwalzen-Dünnband-Stranggussverfahren zum Stranggießen verwendet wird, um ein 1,5-3 mm dickes Gussband zu bilden; wobei die Kristallisationswalzen einen Durchmesser von 500 bis 1500 mm, vorzugsweise 800 mm aufweisen; wobei Wasser zur Kühlung in das Innere der Kristallisationswalzen geleitet wird; wobei eine Gießmaschine eine Gießgeschwindigkeit von 60 bis 150 m/min hat; wobei ein zweistufiges System zum Abgeben und Verteilen von geschmolzenem Stahl für die Zufuhr von geschmolzenem Stahl in den Strangguss verwendet wird, d. h. ein Zwischenbehälter + ein Verteiler;

2) Schutz der unteren geschlossenen Kammer
wobei nach dem Austritt eines Gussbandes aus den Kristallisationswalzen das Gussband eine Temperatur von 1420 bis 1480 °C aufweist und direkt in eine untere geschlossene Kammer eintritt, wobei der unteren geschlossenen Kammer ein nicht oxidierendes Gas zugeführt wird, wobei eine Sauerstoffkonzentration in der unteren geschlossenen Kammer auf <5 % geregelt wird; und wobei das Gussband am Ausgang der unteren geschlossenen Kammer eine Temperatur von 1150-1300 °C aufweist;
3) Online-Warmwalzen
wobei das Gussband durch Klemmrollen in der unteren geschlossenen Kammer zu einem Walzwerk transportiert und bei einer Walztemperatur von 1100-1250 °C und einer Warmwalzreduktion von 10-50 %, vorzugsweise 20 bis 50 %, zu einem Stahlband mit einer Dicke von 0,8-2,5 mm gewalzt wird, wobei der warmgewalzte Stahlband eine Dicke von 0,8 bis 2,5 mm, vorzugsweise 1,0 bis 1,8 mm aufweist;
4) Nachwalzkühlung

wobei der Bandstahl nach dem online-Warmwalzen einer Nachwalzkühlung unterzogen wird, wobei der Bandstahl durch Gaszerstäubungs-Schnellabschreckung auf 300 °C oder weniger abgekühlt wird, wobei die Gaszerstäubungs-Schnellkühlung mit einer Abkühlgeschwindigkeit von $\geq$ 120 °C/s durchgeführt wird, um das Stahlband schnell auf 300 °C oder weniger abzukühlen, wobei nach dem Abkühlen der Stahlband eine Mikrostruktur aus Martensit oder Martensit+Bainit aufweist;

5) Aufwickeln des Stahlbandes
wobei nach dem Abschneiden eines qualitativ minderwertigen Kopfbereichs des warmgewalzten und gekühlten Bandstahls mit einer Kopfschere der Bandstahl direkt zu einer Spule gewickelt wird.

**6.** Das Verfahren zur Herstellung des martensitischen Stahlbandes nach Anspruch 5, wobei das Herstellungsverfahren ferner den folgenden Schritt 6 umfasst: Nachbehandlung unter Wärme, wobei die hergestellte Stahlspule einer isothermen Temperbehandlung bei einer isothermen Tempertemperatur von 200 bis 350 °C für eine isotherme Temperzeit von 1 bis 4 Stunden unterzogen wird; oder die hergestellte Stahlspule in eine kontinuierliche Glühfertigungsanlage zur Alterungsbehandlung bei einer Alterungstemperatur von 300 bis 650 °C für eine Alterungszeit von 2 bis 12 Minuten beim kontinuierlichen Glühen eintritt.

**7.** Das Verfahren zur Herstellung des martensitischen Stahlbandes nach Anspruch 5, wobei in Schritt 1) ein Elektroofen zum Schmelzen verwendet wird, um geschmolzenen Stahl herzustellen, wobei 100 % Stahlschrott als Rohmaterial für das Schmelzen ohne Vorabsiebung verwendet wird; alternativ ein Konverter zum Schmelzen verwendet wird, wobei Stahlschrott in einer Menge von mindestens 20 % des Rohmaterials für das Schmelzen ohne Vorabsiebung in den Konverter gegeben wird; wobei der geschmolzene Stahl anschließend zur Veredelung einem LF-Ofen, einem VD/VOD-Ofen oder einem RH-Ofen zugeführt wird.

8. Das Verfahren zur Herstellung des martensitischen Stahlbandes nach Anspruch 5, wobei in Schritt 2) das nicht oxidierende Gas ein Inertgas, $N_2$, Ar oder ein Mischgas aus $CO_2$-Gas, das durch Sublimation von Trockeneis erzeugt wird, $N_2$ und $H_2$ umfasst.

9. Das Verfahren zur Herstellung des martensitischen Stahlbandes nach Anspruch 5, wobei in Schritt 4) die Gaszerstäubungskühlung ein Gas-Wasser-Strömungsverhältnis von 15:1 bis 10:1, einen Gasdruck von 0,5 bis 0,8 MPa und einen Wasserdruck von 1,0 bis 1,5 MPa verwendet.

10. Das Verfahren zur Herstellung des martensitischen Stahlbandes nach Anspruch 5, wobei in Schritt 5) die Aufwicklung mittels einer Doppelwickelvorrichtung oder einer Karussellwickelvorrichtung erfolgt.

11. Das Verfahren zur Herstellung des martensitischen Stahlbandes nach Anspruch 5, wobei die Abkühlgeschwindigkeit in Schritt 4) 120-175 °C/s beträgt und die Wickeltemperatur in Schritt 5) 250-300 °C beträgt.

**Revendications**

1. Bande d'acier martensitique comprenant la composition suivante en pourcentage en poids :
C : 0,16-0,26 %, Si : 0,1-0,5 %, Mn : 0,4-1,7 %, P $\leq$ 0,02 %, S $\leq$ 0,007 %, N : 0,004-0,010 %, Als : < 0,001 %, facultatif B : 0,001-0,006 %, oxygène total $[O]_T$ : 0,007-0,020 % ; et le reste étant constitué de Fe et d'autres impuretés inévitables, et, en même temps, les conditions suivantes sont satisfaites :

   elle comprend l'un ou les deux éléments suivants : Cu : 0,1-0,6 % et Sn : 0,005-0,04 % ;
   elle comprend l'un ou les deux éléments suivants : Nb : 0,01-0,08 % et Mo : 0,1-0,4 % ;
   Mn/S > 250, où :

      la martensite a une fraction volumique d'au moins 75 %,
      la bande d'acier martensitique a une épaisseur de 0,8 à 2,5 mm, et
      la bande d'acier martensitique a une limite d'élasticité de 800 à 1200 MPa, une résistance à la traction de 1100 à 1900 MPa et un allongement de 3 à 13 %.

2. La bande d'acier martensitique selon la revendication 1, dans laquelle la bande d'acier martensitique présente une microstructure de martensite ou de martensite + bainite.

3. La bande d'acier martensitique selon la revendication 1, dans laquelle la bande d'acier martensitique a une épaisseur de 1,0 à 1,8 mm.

4. La bande d'acier martensitique selon la revendication 1, dans laquelle la bande d'acier martensitique comprend à la fois Cu : 0,1-0,6 % et Sn : 0,005-0,04 %.

5. Procédé de fabrication de la bande d'acier martensitique selon l'une des revendications 1 à 4, comprenant les étapes suivantes :

   1) Fusion, coulée continue

      dans laquelle la fusion est effectuée sur la composition définie par la revendication 1, dans laquelle la basicité a=$CaO/SiO_2$ pour le laitrage dans un procédé de fabrication de l'acier est contrôlée à a<1,5, de préférence a<1,2, ou a=0,7-1,0 ; dans laquelle $MnO/SiO_2$ dans une inclusion ternaire $MnO$-$SiO_2$-$Al_2O_3$ dans l'acier fondu est contrôlée à 0,5-2, de préférence 1-1,8 ; dans laquelle la teneur en oxygène libre $[O]_{Free}$ dans l'acier fondu est de 0,0005-0,005 % ;
      dans laquelle une coulée continue à deux cylindres pour bandes minces est utilisée pour la coulée continue afin de former une bande coulée de 1,5-3 mm d'épaisseur ; dans laquelle les rouleaux de cristallisation ont un diamètre de 500 à 1500 mm, de préférence de 800 mm ; dans laquelle de l'eau est fournie à l'intérieur des rouleaux de cristallisation pour le refroidissement ;

dans laquelle une machine de coulée a une vitesse de coulée de 60 à 150 m/min ; dans laquelle un système à deux étages pour la distribution et la répartition de l'acier fondu est utilisé pour l'alimentation en acier fondu dans la coulée continue, c'est-à-dire un répartiteur + un distributeur ;

2) Protection de la chambre fermée inférieure

dans lequel, après la sortie des rouleaux de cristallisation, la bande coulée a une température de 1420 à 1480 °C et entre directement dans une chambre fermée inférieure, dans laquelle un gaz non oxydant est fourni à la chambre fermée inférieure, dans laquelle la concentration en oxygène dans la chambre fermée inférieure est contrôlée à <5 % ; et dans laquelle la bande coulée a une température de 1150 à 1300 °C à la sortie de la chambre fermée inférieure ;

3) Laminage à chaud en ligne

dans lequel la bande coulée est acheminée à travers des rouleaux de pincement dans la chambre fermée inférieure vers un laminoir, et laminée en une bande d'acier ayant une épaisseur de 0,8 à 2,5 mm à une température de laminage de 1100 à 1250 °C et un taux de réduction par laminage à chaud de 10 à 50 %, de préférence de 20 à 50 %, la bande d'acier laminée à chaud ayant une épaisseur de 0,8 à 2,5 mm, de préférence de 1,0 à 1,8 mm ;

4) Refroidissement après laminage

dans lequel la bande d'acier est soumise à un refroidissement après laminage après le laminage à chaud en ligne, dans lequel la bande d'acier est refroidie à 300 °C ou moins par trempe rapide par atomisation de gaz, dans lequel le refroidissement rapide par atomisation de gaz est effectué à une vitesse de refroidissement ≥ 120 °C/s pour refroidir rapidement la bande d'acier à 300 °C ou moins, dans lequel, après le refroidissement, la bande d'acier présente une microstructure de martensite ou de martensite + bainite ;

5) Enroulement de la bande d'acier

dans lequel, après avoir coupé la partie de tête de mauvaise qualité de la bande d'acier laminée à chaud et refroidie à l'aide d'une cisaille à tête, la bande d'acier est directement enroulée en bobine.

6. Le procédé de fabrication de la bande d'acier martensitique selon la revendication 5, dans lequel le procédé de fabrication comprend en outre l'étape 6) : traitement thermique de suivi, dans lequel la bobine d'acier produite est soumise à un traitement de revenu isotherme à une température de revenu isotherme de 200 à 350 °C pendant un temps de revenu isotherme de 1 à 4 heures ; ou la bobine d'acier produite entre dans une ligne de production de recuit continu pour un traitement de vieillissement à une température de vieillissement de 300 à 650 °C pendant une durée de vieillissement de 2 à 12 minutes dans le recuit continu.

7. Le procédé de fabrication de la bande d'acier martensitique selon la revendication 5, dans lequel, à l'étape 1), un four électrique est utilisé pour la fusion afin de produire de l'acier fondu, dans lequel 100 % de ferraille d'acier est utilisée comme matière première pour la fusion sans pré-criblage ; en variante, un convertisseur est utilisé pour la fusion, dans lequel de la ferraille d'acier est ajoutée au convertisseur en une quantité d'au moins 20 % de la matière première pour la fusion sans pré-criblage ; dans lequel l'acier fondu est ensuite acheminé vers un four LF, un four VD/VOD ou un four RH pour affinage.

8. Le procédé de fabrication de la bande d'acier martensitique selon la revendication 5, dans lequel, à l'étape 2), le gaz non oxydant comprend un gaz inerte, $N_2$, Ar, ou un mélange gazeux de $CO_2$ produit par sublimation de glace sèche, $N_2$ et $H_2$.

9. Le procédé de fabrication de la bande d'acier martensitique selon la revendication 5, dans lequel, à l'étape 4), le refroidissement par atomisation gazeuse utilise un rapport gaz/eau de 15:1 à 10:1, une pression de gaz de 0,5 à 0,8 MPa et une pression d'eau de 1,0 à 1,5 MPa.

10. Le procédé de fabrication de la bande d'acier martensitique selon la revendication 5, dans lequel, à l'étape 5), l'enroulement utilise un enrouleur double ou un enrouleur carrousel.

11. Le procédé de fabrication d'une bande d'acier martensitique selon la revendication 5, dans lequel la vitesse de refroidissement à l'étape 4) est de 120 à 175 °C/s, et la température d'enroulement à l'étape 5) est de 250 à 300 °C.

Fig. 1

Fig. 2

Fig. 3

Fig. 4

Temperature/°C

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610123458
- CN 1962099 A
- CN 200610035800
- CN 1884608 A
- CN 200710031548
- CN 101161849 A
- US 6920912 B
- US 6920912 B2
- US 20060182989 A1
- EP 3276022 A1
- CN 103667878 A
- CN 103667895 A
- WO 2016100839 A1

- CN 108359909 B
- WO 2008137898 A1
- WO 2008137899 A1
- WO 2008137900 A1
- CN 200880023157
- CN 101765469 A
- CN 200880023167
- CN 101765470 A
- CN 200880023586
- CN 101795792 A
- CN 02825466X
- CN 1606629 A